Europäisches Patentamt

European Patent Office

Office européen des brevets

(11) Veröffentlichungsnummer : **0 411 469 B1**

## (12) EUROPÄISCHE PATENTSCHRIFT

(45) Veröffentlichungstag der Patentschrift :
**04.03.92 Patentblatt 92/10**

(21) Anmeldenummer : **90114302.4**

(22) Anmeldetag : **26.07.90**

(51) Int. Cl.⁵ : **F02M 3/06**, F16K 31/06

(30) Priorität : **01.08.89 DE 3925362**

(43) Veröffentlichungstag der Anmeldung :
**06.02.91 Patentblatt 91/06**

(45) Bekanntmachung des Hinweises auf die
Patenterteilung :
**04.03.92 Patentblatt 92/10**

(84) Benannte Vertragsstaaten :
**DE FR GB IT NL**

(56) Entgegenhaltungen :
EP-A- 0 128 124
EP-A- 0 322 850
WO-A-88/01705
DE-A- 3 028 898
US-A- 4 522 372
US-A- 4 627 596

(73) Patentinhaber : **VDO Adolf Schindling AG
Gräfstrasse 103
W-6000 Frankfurt/Main 90 (DE)**

(72) Erfinder : **Göcking, Wolfgang
Adolf-Reichwein-Strasse 105
W-6392 Neu Anspach (DE)**
Erfinder : **Johann, Hans-Jürgen
Dr. Fuchs-Strasse 9
W-6382 Friedrichsdorf (DE)**

(74) Vertreter : **Klein, Thomas, Dipl.-Ing. (FH)
Sodener Strasse 9 Postfach 6140
W-6231 Schwalbach a. Ts. (DE)**

(54) **Elektromagnetisches Stellglied.**

## Beschreibung

Die Erfindung betrifft ein elektromagnetisches Stellglied zur Regelung des Durchflusses eines eine Drosselklappe umgehenden Bypasses, welches ein stufenlos verstellbares, den Bypassquerschnitt steuerndes Schließglied und eine Magnetspule mit einem von diesem bewegbaren Anker hat, nach der Gattung des Hauptanspruchs.

Ein solches Stellglied ist aus dem Dokument EP-A-128 124 bekannt. Es weist eine Schließvorrichtung mit einer Steuerhülse auf, die sich bei Bestromung des Magneten in einem gehäusefesten Führungszylinder zu verschieben vermag, wodurch seitliche Öffnungen des Führungszylinder mehr oder weniger freigegeben werden und damit der Luftdurchsatz durch das Stellglied veränderbar ist. Bei stromlosen Magneten verdeckt die Steuerhülse die Öffnungen im Führungszylinder vollständig und unterbindet den Luftdurchsatz. Beim Einsatz des Stellgliedes zur Steuerung oder Regelung der Leerlaufluft einer Brennkraftmaschine ist daher bei einer Störung des Magneten eine Leerlauffunktion nicht mehr möglich.

Ferner ist aus dem Dokument WO 88/01705 ein Druckregelventil für Flüssigkeiten bekannt, bei dem die Federbelastung des durch einen Magneten beeinflußbaren Ankers mittels einer koaxialen Stellschraube einstellbar ist.

Der Erfindung liegt die Aufgabe zugrunde, ein elektromagnetisches Stellglied der eingangs genannten Art so auszubilden, daß bei nicht bestromtem Magneten eine für den Not-Leerlauf einer Brennkraftmaschine ausreichende Luftmenge durchgesetzt werden kann.

Diese Aufgabe wird erfindungsgemäß dadurch gelöst, daß die Steuerhülse einen Notlaufkanal hat, welcher sich in der sich bei nicht bestromter Magnetspule ergebenden Endstellung zwischen der Führungshülse und dem Führungszylinder befindet und bei bestromter Magnetspule in den Führungszylinder eintaucht, bevor die Steuerhülse mindestens bei maximaler Bestromung der Magnetspule aus der Führungshülse austritt.

Das elektromagnetische Stellglied ermöglicht im nicht bestromten Zustand einen geringen Lufdurchsatz, bewegt sich bei Bestromung zunächst in eine Sperrstellung und öffnet bei weiterer Bestromung zunehmend, wenn die Steuerhülse einen Notlaufkanal hat, welcher sich in der sich bei nicht bestromter Magnetspule ergebenden Endstellung zwischen der Führungshülse und dem Führungszylinder befindet und bei bestromter Magnetspule in den Führungszylinder eintaucht, bevor die Steuerhülse aus der Führungshülse austritt.

Konstruktiv besonders einfach ist der Notlaufkanal gestaltet, wenn er durch zwei tangentiale Schlitze in der Führungshülse gebildet ist.

Die Montage des Stellgliedes gestaltet sich besonders einfach und erfordert keine sorgfältigen Einstellarbeiten, wenn das Gehäuse des Stellgliedes zum Einsetzen aller Einbauteile von der seinem Lufteinlaß und Luftauslaß abgewandten Seite ausgebildet ist und wenn diese Seite durch einen mit dem Gehäuse verschweißten Deckel verschlossen ist, wobei zum Aufheben von Spiel im Gehäuse zwischen dem Deckel und dem Flansch des inneren Rückschlußkörpers eine Wellfeder angeordnet ist.

Die Notlaufluft kann auf einfache Weise den speziellen Bedürfnissen des Motors angepaßt werden, wenn gemäß einer Ausgestaltung der Erfindung eine Schließhülse verstellbar in der Führungshülse eingepreßt ist, so daß die Schlitze mehr oder weniger in den Führungszylinder einzutauchen vermögen.

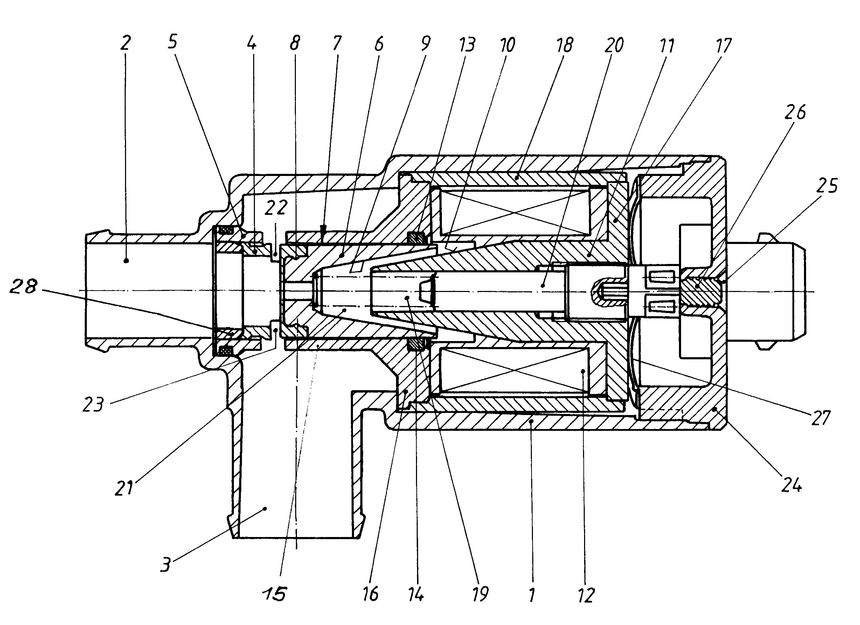

Eine Ausführungsform der Erfindung ist in der Zeichnung dargestellt und wird nachfolgend beschrieben. Die Zeichnung zeigt das Stellglied im Längsschnitt.

Das dargestellte Stellglied hat ein Gehäuse 1 mit einem Lufteinlaß 2 und einem Luftauslaß 3. Zwischen dem Lufteinlaß 2 und dem Luftauslaß 3 ist eine Steuerhülse 4 vorgesehen, die mit ihrem vorderen Ende in eine gehäusefeste Führungshülse 5 eintaucht und in ihr geführt ist. Die Steuerhülse 4 bildet zusammen mit einem Anker 6 ein Schließglied 7. Die steuerhülse 4 besteht aus Kunststoff und ist mit dem Anker 6 über eine Rastverbindung 8 verbunden.

Der Anker 6 hat auf der dem Lufteinlaß 2 abgewandten Seite eine keglige Ausnehmung 9, welche auf einen Konus 10 eines inneren Rückschlußkörpers 11 einer Magnetspule 12 zu gelangen vermag, wenn diese Magnetspule 12 bestromt wird. Zur Führung des Ankers 6 dient ein Lagerring 13, welcher in einer umlaufenden Nut 14 eines den Anker 6 umgebenden Führungszylinders 15 angeordnet ist. Dieser Lagerring 13 besteht aus Kunststoff oder einem anderen Lagerwerkstoff und ist schräg geschlitzt, um in die Nut 14 eingesetzt werden zu können.

Zur Erzeugung eines vollständigen, magnetischen Rückschlusses hat der Führungszylinder 15 einen die lufteinlaßseitige Stirnfläche der Magnetspule 12 abdeckenden Flansch 16 und der innere Rückschlußkörper 11 einen die Rückseite der Magnetspule 12 abdeckenden Flansch 17. Die Flansche 16 und 17 sind durch einen die Magnetspule 12 auf ihrer Mantelfläche umgebenden, zylindrischen Rückschlußkörper 18 miteinander verbunden.

Der innere Rückschlußkörper 11 hat eine koaxiale Durchgangsbohrung 19, in welche eine Stellschraube 20 geschraubt ist. Gegen die lufteinlaßseitige Stirnfläche dieser Stellschraube 20 liegt eine Rückstellfeder 21 an, die sich mit ihrem anderen Ende gegen das Schließglied 7 abstützt und es dadurch in die dargestellte Position vorspannt.

Zwischen der Steuerhülse 4 und dem Führungszylinder 15 hat die Steuerhülse 4 zwei als Notlaufkanal dienende, tangentiale Schlitze 22, 23, durch die in der dargestellten Grundstellung Luft vom Lufteinlaß 2 zum Luftauslaß 3 strömen kann.

Das Gehäuse 1 ist von einem Deckel 24 verschlossen, der durch Schweißen mit dem Gehäuse 1 verbunden ist. Dieser Deckel 24 hat eine mittige Öffnung 25, die mit der Stellschraube 20 fluchtet und durch einen Stopfen 26 verschlossen ist. Bevor der Stopfen 26 eingesetzt ist, kann man durch die Öffnung 25 beispielsweise einen Sechskantschlüssel schieben und mit ihm die Stellschraube 20 verstellen. Das Stellglied 7 ist so ausgebildet, daß alle Einbauteile in der Zeichnung gesehen von rechts durch die vom Deckel 24 zu verschließende Öffnung montiert werden können. Zwischen dem Deckel 24 und dem Flansch 17 ist eine Wellfeder 27 angeordnet, die alle Einbauteile in der gezeigten Position hält.

In der dargestellten, nicht bestromten Stellung der bauteile des Stellgliedes vermag eine für den Notlauf einei brennkraftmaschine ausreichende Luftmenge vom Lufteinlaß 2 durch die Schlitze 22 und 23 zum Luftauslaß 3 zu gelangen. Wird die Magnetspule 12 bestromt, so bewegt sich das Schließglied 7 mit seinem Anker 6 gegen die Kraft der Rückstellfeder 21 zum Rückschlußkörper 11 hin. Dabei gelangen zunächst die Schlitze 22, 23 in den Führungszylinder 15, so daß dann die Verbindung zwischen dem Lufteinlaß 2 und dem Luftauslaß 3, abgesehen von Leckluftmengen, vollständig gesperrt ist. Erhöht man die Spannung der Magnetspule 12, dann bewegt sich der Anker 6 weiter in Richtung der Magnetspule 12. Dabei taucht die Steuerhülse 4 aus der Führungshülse 5 heraus und öffnet dadurch zunehmend eine Strömungsverbindung zwischen dem Lufteinlaß 2 und dem Luftauslaß 3.

## Patentansprüche

1. Elektromagnetisches Stellglied zur Regelung des Durchflusses eines eine Drosselklappe umgehenden Bypasses, welches ein stufenlose verstellbares, den Bypassquerschnitt steuerndes Schließglied und eine Magnetspule mit einem von diesem bewegbaren Anker hat, wobei das Schließglied (7) auf seiner der Magnetspule (12) zugewandten Seite als Anker (6) ausgebildet ist und in der Magnetspule (12) ein Rückschlußkörper (11) angeordnet ist, welcher auf der Seite des Schließgliedes (7) einen Konus (10) aufweist, auf den das Schließglied (7) mit einer kegligen Ausnehmung (9) bewegbar ist, und wobei das Schließglied (7) aus dem dem Rückschlußkörper (11) zugewandten Anker (6) und auf der anderen Seite aus einer Steuerhülse (4) besteht, welche mit ihrem der Magnetspule (12) abgewandten Ende in Grundstellung des Stellgliedes (7) in eine gehäusefeste Führungshülse (5) eingetaucht ist, aus der heraus sie mindestens bei maximaler Bestromung der Magentspule (12) sich verschiebt und welche mit ihrem de Magentspule (12) zugewandten Ende in einem gehäusefesten Fühtungszylinder (15) angeordnet ist, dadurch gekennzeichnet, daß die Steuerhülse (4) einen Notlaufkanal (Schlitze 22, 23) hat, welcher sich in der sich bei nicht bestromter Magnetspule (12) ergebenden Endstellung zwischen der Führungshülse (5) und dem Führungszylinder (15) befindet und bei bestromter Magnetspule (12) in den Führungszylinder (15) eintaucht, bevor die Steuerhülse mindestens bei maximaler Bestromung der Magnetspule (4) aus der Führungshülse (5) austritt.

2. Elektromagnetisches Stellglied nach Anspruch 1, dadurch gekennzeichnet, daß der Notlaufkanal durch zwei tangentiale Schlitze (22, 23) in der Steuerhülse (4) gebildet ist.

3. Elektromagnetisches Stellglied nach Anspruch 1 oder 2, dadurch gekennzeichnet, daß das Gehäuse (1) des Stellgliedes zum Einsetzen aller Einbauteile von der seinem Lufteinlaß (2) und Luftauslaß (3) abgewandten Seite ausgebildet ist und daß diese Seite durch einen mit dem Gehäuse (1) verschweißten Deckel (24) verschlossen ist, wobei zum Aufheben von Spiel im Gehäuse (1) zwischen Deckel (24) und dem Flansch (17) des inneren Rückschlußkörpers (11) eine Wellfeder (27) angeordnet ist.

4. Elektromagnetisches Stellglied nach zumindest einem der vorangehenden Ansprüche, dadurch gekennzeichnet, daß eine Schließhülse (28) verstellbar in der Führungshülse (5) eingepreßt ist, so daß die Schlitze (22, 23) mehr oder weniger in den Führungszylinder (15) einzutauchen vermögen.

## Claims

1. Electromagnetic actuator for regulating the throughflow of a bypass circumventing a throttle valve,which actuator has a closure element adjustable in infinitely variable manner controlling the bypass cross-section, and also a magnet coil with an armature adapted to be moved by said element, the closure element (7) being constructed at its side directed towards the magnet coil (12) as an armature (6) and there being arranged in the magnet coil (12) a backcircuit element (11) which at the closure element(7) side has a cone (10) on to which a conical recess (9) of the closure element (7) is adapted to move, and the closure element (7) comprising the armature (6) directed towards the back-circuit element (11) and at the other side a control sleeve (4) whose end remote from the magnet coil (12) in the basic position of the actuator (7) extends into a guide sleeve (5) fast with the housing, from which guide sleeve it is displaced at least on maximum energising of the magnet coil (12), and whose end directed towards the magnet coil (12) is arranged in a guide cylinder (15) fast with the housing, characterised in that the control sleeve (4) has an emergency running duct (slots 22, 23) which in the end position resulting when the magnet coil (12) is not energised is situated between the guide sleeve (5) and the guide cylinder (15), and when the magnet coil (12) is energised enters the guide cylinder (15) before the control sleeve (4) issues from the guide sleeve (5) at least on maximum energisation of the magnet coil.

2. Electromagnetic actuator according to claim 1, characterised in that the emergency running duct is formed by two tangential slots (22, 23) in the control sleeve (4).

3. Electromagnetic actuator according to claim 1 or 2, characterised in that the housing (1) of the actuator is constructed to allow insertion of all components from its side remote from its air inlet (2) and air outlet (3), and that this side is closed by a cover (24) welded to the housing (1), and a corrugated spring (27) is arranged between the cover (24) and the flange (17) of the inner back-circuit element (11) to take up play in the housing (1).

4. Electromagnetic actuator according to at least one of the preceding claims, characterised in that a closing sleeve (28) is pressed-in adjustably in the guide sleeve (5), so that the slots (22, 23) can enter the guide cylinder (15) to a greater or lesser extent.

## Revendications

1. Dispositif électromagnétique de réglage du débit dans un conduit de dérivation contournant un volet étrangleur, dispositif comportant un élément obturateur à variation continue, qui détermine la section utile de ce conduit, et une bobine d'électroaimant pouvant déplacer une armature, l'élément obturateur (7) ayant son côté adjacent à la bobine (12) conformé en armature (6) et cette dernière contenant un élément intérieur (11) de fermeture de champ magnétique qui présente, du côté de cet élément obturateur (7), un cône (10) sur lequel une cavité conique (9) dudit élément obturateur (7) peut s'appliquer, cet élément obturateur (7) étant composé de l'armature (6) tournée vers l'élément (11) de fermeture de champ magnétique et, de l'autre côté, d'une douille (4) de commande, dont l'extrémité opposée à la bobine (12) pénètre (dans la position normale dudit élément obturateur 7) dans un manchon (5) de guidage qui est solidaire du corps, et dont elle sort, au moins lorsque le courant de la bobine (12) d'excitation est maximal, l'extrémité de cette douille (4) de commande, adjacente à la bobine (12), étant disposée dans un cylindre (15) de guidage solidaire du corps (1), dispositif caractérisé en ce que la douille (4) de commande comporte un canal (fentes 22, 23) pour marche à vide en régime de secours et qui, dans la position finale qu'il occupe lorsqu'aucun courant ne passe dans la bobine (12), se trouve entre le manchon (5) de guidage et le cylindre (15) de guidage et qui, lorsqu'un courant passe dans la bobine (12), pénètre dans le cylindre (15) avant que la douille (4) de commande sorte, au moins lorsque le courant qui passe dans la bobine a sa valeur maximale, de ce manchon de guidage (5).

2. Dispositif électromagnétique de manoeuvre selon la revendication 1, caractérisé en ce que le canal pour marche à vide de secours est formé par deux fentes (22, 23) tangentielles de la douille (4) de commande.

3. Dispositif électromagnétique de manoeuvre selon la revendication 1 ou 2, caractérisé en ce que le corps (1) de ce dispositif est conformé de manière que tous les éléments constitutifs puissent être mis en place par son côté opposé aux passages d'entrée (2) et de sortie (3) de l'air et en ce que ce côté est fermé par un couvercle (24) qui est soudé à ce corps (1), une rondelle élastique ondulée (27) étant disposée entre ce couvercle (24) et la collerette (17) de l'élément intérieur (11) de fermeture de champ magnétique afin de supprimer tout jeu dans le corps (1).

4. Dispositif électromagnétique de manoeuvre selon l'une au moins des revendications précédentes, caractérisé en ce qu'une douille (28) de fermeture est emmanchée de manière réglable dans le manchon (5) de guidage de façon que les fentes (22, 23) puissent pénétrer plus ou moins dans le cylindre (15) de guidage.